# EUROPÄISCHE PATENTSCHRIFT

(11) **EP 2 642 395 B1**
(45) Veröffentlichungstag und Bekanntmachung des Hinweises auf die Patenterteilung: **19.12.2018**
(21) Anmeldenummer: 13160137.9
(22) Anmeldetag: 20.03.2013
(51) Int. Cl.: G06F 11/36

(54) **Verfahren und Vorrichtung zum Ausführen von Workflow-Skripten**
Method and apparatus for executing work flow scripts
Procédé et dispositif d'exécution de scripts de flux de travail

(30) Priorität: 21.03.2012 EP 12160552
(43) Veröffentlichungstag der Anmeldung: 25.09.2013
(73) Patentinhaber: ServiceTrace e.K., 64287 Darmstadt (DE)
(72) Erfinder: Duus, Markus, 64287 Darmstadt (DE); Schach, Justus, 67547 Worms (DE)
(74) Vertreter: Lemcke, Brommer & Partner Patentanwälte Partnerschaft mbB

(56) Entgegenhaltungen:
- US-A1- 2006 004 667
- US-A1- 2009 103 769
- Anonymous: "Be efficient - Virtualize & automate your test environment - VMware PowerCLI Blog - VMware Blogs", , 29 June 2012 (2012-06-29), XP55220564, Retrieved from the Internet: URL:https://blogs.vmware.com/PowerCLI/2012 /06/be-efficient-virtualize-automate-your- test-environment.html [retrieved on 2015-10-13]

## Beschreibung

Die Erfindung betrifft ein Verfahren und ein entsprechendes Computerprogrammprodukt zur skriptgesteuerten Ausführung von Applikationen auf einem Computer unter Zuhilfenahme eines Softwareroboters, der eine graphische Benutzerschnittstelle unter Anwendung von Mustererkennung ansteuert, sowie ein entsprechendes Computersystem.

Ein solches Verfahren, Computerprogrammprodukt und Computersystem sind in der EP2189908A1 beschrieben. Ein anderes Computerprogramm zur automatisierten Steuerung eines Anwendungsprogrammes über die graphische Benutzerschnittstelle ist außerdem in der Schrift US 2009/0103769 A1 beschrieben.

Da ein Betriebssystem, wie beispielsweise Microsoft Windows, im gesperrten Zustand (Screen locked) nicht zulässt, dass GUI-Aktionen, wie Mausbewegungen und Tastatureingaben, erfolgen dürfen, wie dies beim Gegenstand der genannten Patentanmeldung der Fall ist, muss zur Ausführung eines Skriptes beziehungsweise zur Ansteuerung einer graphische Benutzerschnittstelle (Graphical User Interface-GUI) durch einen Softwareroboter ein Benutzer angemeldet sein. Dies hat zur Folge, dass bei einem physischen Rechner zum einen jederzeit Manipulationen möglich sind und dass zum anderen Daten ausspioniert werden können. Ausgehend davon, dass auch geschäftskritische Prozesse im End2End-Monitoring überwacht werden, kann der für den Workflow verwendete Benutzer weitreichende Rechte besitzen, und auch die angezeigten Daten sollten nicht für jedermann sichtbar sein.

Aktuelle Lösungen sehen vor, dass solche Messrechner in einem eigens hierfür vorgesehenen, abgeschlossen Raum betrieben werden.

Zusammenfassend weist der Stand der Technik die folgenden Nachteile auf:
- Es muss immer ein Benutzer angemeldet sein.
- Bei angeschlossenem Monitor können Daten ausgespäht werden.
- Bei angeschlossener Maus bzw. Tastatur kann die Kontrolle übernommen werden.
- Der Rechner muss in einem Raum stehen, der nicht für jedermann zugänglich ist.
- Im Falle einer dezentralen Messstation muss es vor Ort eine vertrauenswürdige Person geben, u.a. zum Hochfahren des Rechners, um gegebenenfalls einen Benutzer anzumelden, oder für Wartungsarbeiten.

Eine Möglichkeit, obige Probleme zu entschärfen, ist die Nutzung von virtuellen Maschinen (VM). Dabei ist im Wesentlichen nur das Problem mit den Räumlichkeiten gelöst. Von der Administrationsseite muss beachtet werden, dass alle Anwender (Admins), die Zugang zu den Konsolen der VMs besitzen, ebenfalls Einsicht und Kontrolle auf den virtualisierten Rechner haben. Gerade in größeren Unternehmen kann nicht davon ausgegangen werden, dass jede im Rechenzentrum anwesende Person auch dort Einsicht haben sollte. Gänzlich ungeeignet ist die Virtualisierung im Falle von Rechnern, die in Geschäftsräumen oder Filialen stehen. Gerade hier kommt End2End-Monitoring jedoch überwiegend zum Einsatz, und in diesem Falle handelt es sich um physische Rechner vor Ort.

Ein Verfahren zur Validierung von Computerprodukten unter Verwendung von virtuellen Maschinen ist beispielsweise in dem Internet-Blog VMware PowerCLI Blog unter dem Beitrag "Be efficient - Virtualize & automate your test environment" von L. Kirilov beschrieben.

Die Erfindung hat sich zur Aufgabe gestellt, ein Verfahren und ein entsprechendes Computerprogrammprodukt zur skriptgesteuerten Ausführung von Applikationen auf einem Computer unter Zuhilfenahme eines Softwareroboters, der eine graphische Benutzerschnittstelle unter Anwendung von Mustererkennung ansteuert, sowie ein entsprechendes Computersystem anzugeben, welche die vorstehend aufgeführten sicherheitsrelevanten Nachteile des Standes der Technik vermeiden.

Die Aufgabe wird hinsichtlich des Verfahrens gelöst durch die Merkmale des Anspruchs 1, hinsichtlich des Computerprogrammprodukts durch die Merkmale des Anspruchs 10 und hinsichtlich des Computersystems durch die Merkmale des Anspruchs 13. Vorteilhafte Ausgestaltungen sind den abhängigen Ansprüchen zu entnehmen.

Die vorliegende beschriebene Erfindung, im Folgenden auch als "MultiTracer" bezeichnet, ermöglicht dagegen in Weiterbildung der europäischen Patentanmeldung EP2189908A1 die verdeckte Ausführung von Windows GUI (Graphical User Interface) bezogenen Workflow-Skripten, insbesondere - aber ohne Beschränkung - zur Überwachung der Qualität von IT-Systemen auf Applikationsebene. Diesbezüglich wird vollinhaltlich auf die vorstehend genannte Anmeldung Bezug genommen. Die genannten Workflow-Skripten entsprechen dabei grundsätzlich denjenigen Überwachungsfunktionen bzw. Arbeitsabläufen, die in der früheren Anmeldung von dem dort erwähnten Software-Roboter durchgeführt werden. Die Erfindung ist dabei grundsätzlich nicht auf Windows-Systeme beschränkt.

Um die weiter unten beschriebenen Vorteile zu erreichen und die vorstehend aufgeführten sicherheitsrelevanten Nachteile des Standes der Technik zu vermeiden, ist bei einem Verfahren der eingangs genannten Art auf dem Computer ein Terminalserver installiert bzw. wird entsprechend bereitgestellt. Auf dem Computer wird vorzugsweise von einer ersten Programmkomponente ein Terminalclient gestartet, der über ein Remotesteuerungsprotokoll eine Remoteverbindung zu dem Terminalserver aufbaut. Der Terminalclient stellt dabei die graphische Benutzerschnittstelle für den Softwareroboter bereit. Innerhalb einer dem Terminalclient zugeordneten Sitzung wird dann eine zweite Programmkomponente gestartet, welche den Softwareroboter aufruft und ein Skript zur Ausführung der wenigstens einen Applikation ausführt.

Ein entsprechendes, erfindungsgemäßes Computerprogrammprodukt umfasst auf einem Datenträger gespeicherte oder speicherbare Programmanweisungen, bei deren Ausführung auf einer geeignete Rechnerarchitektur das erfindungsgemäße Verfahren durchgeführt wird, wobei die Programmanweisungen insbesondere die erste Programmkomponente und die zweite Programmkomponente programmtechnisch definieren.

Ein Computersystem zur skriptgesteuerten Ausführung von Applikationen stellt eine Ablaufumgebung bereit, die eine Hardware eines Computers, ein auf dem Computer installiertes Betriebssystem, sowie vorzugsweise wenigstens eine weitere installierte Softwareplattform umfasst. Das Betriebssystem weist eine graphische Benutzerschnittstelle auf. Das Computersystem enthält außerdem einen Softwareroboter, der programmtechnisch eingerichtet ist bei skriptgesteuerter Ausführung die graphische Benutzerschnittstelle unter Anwendung von Mustererkennung anzusteuern und dadurch die wenigstens eine Applikation auf dem Computer auszuführen. Außerdem umfaßt das Computersystem einen Terminalserver, einen Terminalclient sowie erste und zweite Programmkomponenten. Die erste Programmkomponente ist programmtechnisch eingerichtet, den Terminalclient zu starten und derart zu konfigurieren, dass dieser über ein Remotesteuerungsprotokoll eine Remoteverbindung zu dem Terminalserver aufbaut. Der Terminalclient stellt die graphische Benutzerschnittstelle für den Softwareroboter bereit. Die erste Programmkomponente ist außerdem programmtechnisch eingerichtet, innerhalb einer dem Terminalclient zugeordneten Sitzung die zweite Programmkomponente zu starten. Die zweite Programmkomponente wiederum ist programmtechnisch eingerichtet, den Softwareroboter aufzurufen und ein Skript zur Ausführung der wenigstens einen Applikation auszuführen.

Die vorliegende Erfindung schlägt demnach zur Vermeidung der genannten Nachteile vor, sich das Remote Desktop Protokoll (RDP) - oder ein vergleichbares Remotesteuerungsprotoll, beispielsweise im Falle von Nicht-Windows-Betriebssystemen - zu Nutze zu machen. Mit Hilfe eines solchen Remotesteuerungsprotokolls kann man von einem Rechner den Desktop eines entfernten Rechners steuern. Der dazu benötigte Client ist ein sogenannter Terminalclient. Da mehrere gleichzeitige Verbindungen möglich sind, wird hier pro Benutzeranmeldung von Sitzungen (Sessions) gesprochen. Normalerweise kann ein Anwender direkt mit diesem Client arbeiten. Neben einer Remoteverbindung kann man vor allem bei den Microsoft Windows Server Varianten auch auf den Rechner selbst zugreifen. Im Rahmen der vorliegenden Erfindung wird diese Clienttechnologie benutzt, um eine solche Verbindung auf den zu überwachenden Rechner selbst durchzuführen.

Da RDP von Microsoft nicht offen gelegt ist, wird im Rahmen einer bevorzugten Ausgestaltung der Erfindung eine ActiveX-Control verwendet, welche von Microsoft frei verfügbar ist. Mit Hilfe dieser Active-X Control ist es möglich, eine RDP-Verbindung zu öffnen, wobei die damit verbundene GUI nicht sichtbar zu sein braucht.

Es ergeben sich insbesondere folgende Vorteile:
- Ein Benutzer kann angemeldet sein, ohne dass die zugehörige Session sichtbar ist. Insbesondere ist der Bildschirm nicht sichtbar, und es ist nicht möglich, Eingabegeräte wie die Tastatur oder Maus zu übernehmen.
- Der Benutzer-Account kann durch das steuernde Framework des MultiTracers verwaltet werden und muss nur dem Administrator bekannt sein, der auch die zugehörigen Workflow-Skripte pflegt.
- Auf einem Windows-Serversystem können mehrere RDP-Verbindungen parallel geöffnet werden. Somit können auch auf einem Rechner (physisch oder auch virtuell) mehrere Workflows parallel arbeiten. Dieser Betrieb wird vorliegend als MultiSession Modus des MultiTracers bezeichnet.
- Durch die zentrale Verwaltung und die flexible Art der Sessionbildung durch das AktiveX-Control können Systemparameter wie Auflösung, Farbtiefe und Systemsprache der Terminalsessions frei gewählt werden.

Für die reinen Clientvarianten, wie Windows XP und Windows 7, funktioniert dieser Ansatz nicht direkt. Es ist zwar auch hier möglich, von einem entfernten Rechner den Desktop anzusteuern, aber von dem Rechner kann nicht auf sich selbst zugegriffen werden. Es handelt sich um eine rein lizenzrechtlich begründete Sperrung dieser Funktionalität.

Für den MultiTracer im SingleSession Modus gibt es daher eine Weiterbildung der erfindungsgemäßen Lösung, die vorsieht, dass man auf dem Clientsystem einen kleinen Linuxkern (oder einen Kern basierend auf einem anderen Betriebssystem) betreibt. Das MultiTracer-System kommuniziert dabei mit diesem (Linux-)Kern und startet darin eine X-Serveranwendung RDESKTOP oder dergleichen. Da Windows den Linuxkern bzw. das andere Betriebssystem wie einen entfernten Rechner behandelt, kann nun eine RDP-Session auf dem Windowsrechner gestartet werden.

Bei einer anderen Weiterbildung wird anstelle eines Linuxkerns ein alternativer RDP-basierter Terminalserver installiert, um lokale RDP-Verbindungen herstellen zu können. Bei dem Terminalserver handelt es sich um eine eigenständige Softwarekomponente, die wie jede andere Software auf dem Computer installiert werden kann. Vorzugsweise bietet dieser Terminalserver ausschließlich die Möglichkeit, lokal eine RDP-Verbindung aufzubauen, erlaubt es hingegen nicht, gleichzeitig von einem anderen Rechner aus eine zusätzliche Verbindung aufzubauen.

Als zentraler Steuerbaustein fungiert bei entsprechender Weiterbildung der Erfindung ein Softwareagent, der als MultiTracer-Agent bezeichnet wird, und der vorzugsweise als Windows Service implementiert ist. Dieser Softwareagent verwaltet die Workflow-Skripte, welche durch einen Softwareroboter innerhalb der durch den Terminalclient eröffneten Session ausgeführt werden sollen. Dabei sorgt der Agent dafür, dass die Skripte in der korrekten Version aus dem entsprechenden Verzeichnis oder Speicher (Repository) geholt werden, und steuert entsprechend den Scheduling-Vorgaben eines übergeordneten Control Centers die Ausführung der in den Skripten definierten Workflows.

Dazu startet er vorzugsweise eine erste, als StSem bezeichnete Softwarekomponente, welche per Remotesteuerungsprotokoll eine entsprechende Session öffnet und überwacht. Vorgaben für den von der ersten Softwarekomponente gestarteten Terminalclient sind beispielsweise ein Benutzeraccount und eine Bildschirmauflösung. Die erste Softwarekomponente startet innerhalb der Terminalsession eine zweite, als StSec bzw. StSec.exe bezeichnete Softwarekomponente, welche dann die eigentliche Ausführung und Kontrolle des Workflowskripts übernimmt und direkt mit dem Softwareagenten kommuniziert. Die Komponente StSec.exe wiederum befindet sich innerhalb der Windows-Session, die pro Benutzer gestartet wird. Dies ist nötig, da der Workflow innerhalb dieser Session ablaufen soll und von einem Programm gestartet werden muss, welches sich bereits in der Session befindet.

Wird der Softwareagent als Windows Service implementiert, so wird dieser vom Windows-eigenen Session Control Manager (SCM) gestartet. Da wiederum der Prozess StSem bzw. StSem.exe vom Softwareagenten gestartet wird, befindet er sich in einem zwar vorhandenen aber nicht sichtbaren Desktop, der vom SCM für Windows Services bereit gestellt wird. Somit stellt der StSem zwar die (eigentlich) sichtbare Benutzerschnittstelle dar, aus welcher der StSec per RDP verdeckt gestartet und gesteuert wird. Trotzdem ist aber ein Anwender ohne zumindest lokale Administratorrechte nicht in der Lage, die entsprechenden Fenster des StSem zu einzusehen, da sie sich auf dem nicht sichtbaren Desktop des SCMs befinden.

Die Erfindung ermöglicht es, ein Softwaresystem in seiner Gesamtheit zu überprüfen, wobei eine zu überwachende oder zu prüfende Softwareinstallation insbesondere einen Client- und einen Serverteil umfassen kann. In diesem Fall kann der Client per Softwareroboter bedient werden, um das Softwaresystem zu überprüfen. In vorteilhafter Weise kann dabei zur Durchführung von Lasttests mit möglichst vielen Client-Instanzen auf den betreffenden Server zugegriffen werden. Diese Clients können hierbei in jeweils eigenen, separaten Terminal-sessions per Softwareroboter gesteuert werden, wobei deren Terminalsessions physisch auf ein und demselben Rechner per MulitTracer ausgeführt werden können, auf dem sich auch der Terminalserver selbst befindet. Zusätzlich ist es möglich, per Softwareagenten Terminalsession-Clients auf physisch entfernten Rechnern zu starten.

Weitere Eigenschaften und Vorteile der vorliegenden Erfindung ergeben sich aus der nachfolgenden Beschreibung von Ausführungsbeispielen anhand der Zeichnung.
- Figur 1: zeigt den programmtechnischen Aufbau einer MultiTracer-Session innerhalb der Ablaufumgebung eines Computers und
- Figur 2: zeigt ein Ablaufdiagramm einer MultiTracer-Session.

Die vorliegende Erfindung beruht auf der Verwendung eines Netzwerkprotokolls, mit dem der Desktop eines fernen Computers dargestellt und gesteuert werden kann. Ein solches Remotesteuerungsprotokoll ist u.a. das proprietäre Remote Desktop Protokoll RDP von Microsoft, welches im vorliegenden Ausführungsbeispiel zum Einsatz kommt.

Wenn zwischen zwei Computersystemen eine RDP-basierte Fernsteuerverbindung hergestellt wird, fungiert eines der beiden Systeme als Terminalserver, das andere als Terminalclient. Der Terminalserver erzeugt Bildschirmausgaben auf dem Terminalclient. Außerdem können Maus- und Tastatureingaben vom Terminalclient entgegengenommen werden. RDP regelt dabei die Übertragung der Bildschirminhalte sowie Tastatur- und Mauseingaben über das Netzwerk. Neben Bildschirmausgaben sowie Tastatur- und Maus-Eingaben kann mit RDP auch die Tonausgabe der Sitzung zum Terminalclient umgeleitet werden. Außerdem sind die Nutzung eines Druckers und der Zugriff auf Speichermedien des Terminalclients möglich.

RDP setzt auf einer TCP/IP Verbindung auf und stellt ein Protokoll der Anwendungsschicht dar. RDP-basierte Terminalserver sind Bestandteil so gut wie aller Windows-Betriebssysteme und daher auf den meisten Computern bereits installiert. Alternativ kann natürlich auch ein eigenständiger, von einer Windows-Installation unabhängiger Terminalserver installiert werden. Dies ist insbesondere bei den Windows-Versionen XP und 7 vorteilhaft, da hierdurch die lizenzrechtliche Sperrung interner Terminalsitzungen überwunden wird. Terminalclients, wie etwa das Programm mstsc.exe, existieren ebenfalls für die meisten Betriebssysteme und werden mit dem Betriebssystem mitgeliefert.

Im Rahmen des Softwarekomponentenmodells ActiveX von Microsoft stehen eine Reihe von ActiveX-Steuerelemente (sogenannte Controls) zur Benutzung von RDP zur Verfügung. Da ActiveX auf dem Component-Object-Model (COM) von Microsoft aufbaut, können die Steuerelemente einfach in andere Programmiersprachen integriert werden, wie z.B. Java, Basic oder C++.

Die vorliegende Erfindung basiert, wie eingangs erwähnt, auf dem in der europäischen Patentanmeldung EP2189908A1, auf die hier vollumfänglich Bezug genommen wird, ausführlich beschriebenen Verfahren zur Ausführung von GUIbezogenen Workflow-Skripten.

Die dort beschriebene Lösung ermöglicht es, auf einem Computersystem auf Anwendungsebene Prüf- und Messabläufe durchzuführen, um beispielweise die Funktionsfähigkeit oder Performanz des Computersystems und dessen Anwendungen zu testen und zu messen.

Um nicht in die zu prüfenden Anwendungen einzugreifen, erfolgt die Bedienung über die graphische Benutzerschnittstelle in genau derselben Weise, wie ein menschlicher Benutzer sie vorfinden und bedienen würde. Hierzu dient ein Softwareroboter, der mittels (speziell konturabhängiger) Mustererkennung vordefinierte Zustände erkennen und graphische Bedienelemente über Maus- oder Tastatureingaben anwählen und bedienen kann. Für weitere Details wird auf die EP2189908A1 verwiesen.

Wie vorstehend beschrieben, wird RDP normalerweise dazu verwendet, den Desktop eines entfernten Computers zu steuern. Vorliegend wird RDP jedoch eingesetzt, um innerhalb eines Computers einen insbesondere von einer Benutzeranmeldung unabhängigen und von außen nicht sichtbaren oder manipulierbaren Desktop zu schaffen, auf den der Softwareroboter zugreifen und insbesondere die genannten Test- und Messabläufe durchführen kann.

Die von dem Softwareroboter auszuführenden Arbeitsabläufe (Workflows) werden von einer hier nicht weiter interessierenden Programmeinheit, die als Control Center bezeichnet wird, definiert und in Form von einem oder mehreren Skripten zusammengestellt. Über das Control Center können auch Zeitpläne vorgegeben werden (Scheduling Vorgaben), wann welche Arbeitsabläufe ausgeführt werden sollen. Bei der Ausführung der Skripte durch einen SkriptInterpreter wird der genannte Softwareroboter zur Bedienung der graphischen Benutzerschnittstelle eingesetzt.

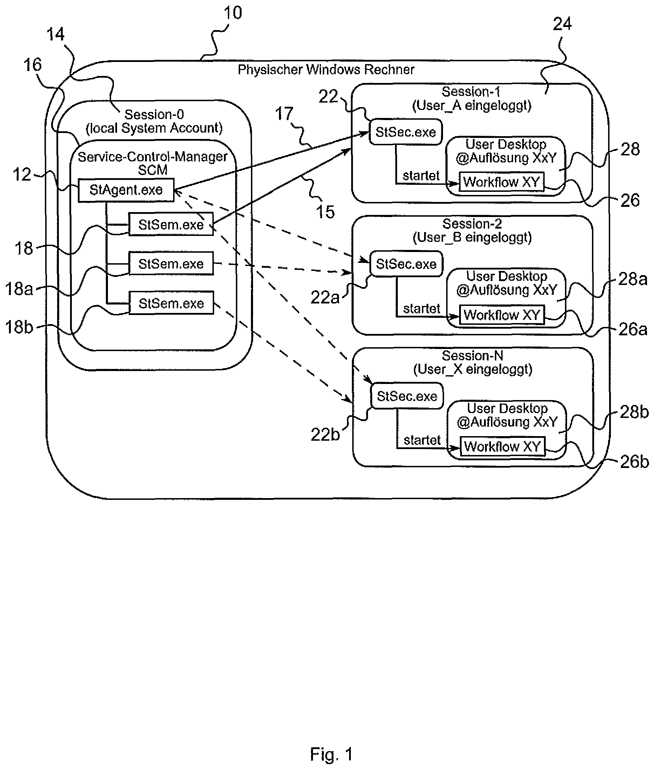

Die Ausführung der Arbeitsabläufe selbst wird im Ausführungsbeispiel durch ein Zusammenspiel von drei Programmkomponenten bewerkstelligt. In Figur 1 ist eine logische Aufteilung der Programmkomponenten innerhalb der Ablaufumgebung 10 eines Computers dargestellt. Die Ablaufumgebung 10 umfasst die Hardware des Computers, dessen Betriebssystem, hier beispielsweise ein Windows Betriebssystem, sowie mögliche weitere installierte Softwareplattformen, beispielsweise ein. NET Framework, ein ActiveX Softwarekomponentenmodell oder ein Java Runtime Environment (JRE). Der Computer selbst ist ein handelsüblicher Computer, auf den hier deshalb nicht näher eingegangen werden braucht. Die Hardware hat dabei üblichen Aufbau und umfasst z.B. einen oder mehrere Prozessoren, Arbeitsspeicher, Graphikeinheit (z.B. Graphikkarte und Bildschirm), Netzwerkanbindung (z.B. eine oder mehrere Netzwerkkarten), sowie Peripheriegeräte, wie Festplatten, Drucker, Tastatur, Maus, etc., welche durch ein oder mehrere Bussysteme verbunden sind.

Auf dem Computer ist ein Softwareagent 12 installiert, der vorliegend auch als MultiTracer-Agent bezeichnet wird. Als Softwareagent wird üblicherweise ein Computerprogramm bezeichnet, das zu einem gewissen, eigenständigem und eigendynamischen (autonomen) Verhalten fähig ist. In Abhängigkeit von verschiedenen Zuständen kann ein Softwareagent vorbestimmte Verarbeitungsvorgänge ausführen, ohne dass von außen ein weiteres Startsignal gegeben werden oder während des Vorgangs ein äußerer Steuerungseingriff erfolgen muss. Zu diesem Zweck ist der MultiTracer-Agent 12 vorzugsweise als Windows Systemdienst eingerichtet.

Ein Windows-Systemdienst ist ein Programm, das als spezialisierter Dienst im Hintergrund von Windows läuft. Bei einem Unix-Betriebssystem entspricht dem Systemdienst ein sogenannter Daemon. Hierdurch ist es möglich, unabhängig von einer Benutzeranmeldung aus dem Hintergrund geplante Arbeitsabläufe zu starten und durchzuführen.

Der MultiTracer-Agent 12 verwendet standardmäßig das lokale Systemkonto 14. Das lokale Systemkonto 14 ist ein in Windows vordefiniertes Konto (engl.: Account), das vollständigen Zugriff auf den Computer hat. Es wird ausschließlich von Systemdiensten verwendet und hat kein einem Benutzer zugängliches Kennwort. Windows stellt außerdem den Service Control Manager (SCM) 16 bereit, der das Starten und Anhalten von Diensten verwaltet. Vom SCM 16 wird der MultiTracer-Agent 12 beim Systemstart im lokalen Systemkonto 14 gestartet und stellt damit die Ausgangssitzung (in Figur 1 als "Session 0" bezeichnet) dar, von der aus die Ausführung der Workflow-Skripte initiiert wird. Von einem Windows-Systemdienst gestartete Programme befinden sich in einem zwar vorhandenen aber nicht sichtbaren Desktop, der vom SCM bereit gestellt wird. Da sie sich auf dem nicht sichtbaren Desktop des SCMs befinden, können die entsprechenden Fenster von einem Anwender zumindest ohne weitreichende Berechtigungen somit nicht eingesehen werden.

Selbstverständlich kann der MultiTracer-Agent 12 auch in einem anderen Konto laufen, sofern dieses über ausreichende Berechtigungen verfügt, oder er kann von einem Benutzer manuell aufgerufen werden.

Die anderen beiden Programmkomponenten neben dem MultiTracer-Agent (StAgent) 12 sind die Programme StSem bzw. StSem.exe 18 und StSec bzw, StSec.exe 22.

Die Komponente StSem 18 ist der Session Manager. Session steht dabei für die Terminal-Session, die geöffnet wird, um anschließend darin das Skript ausführen zu können. StSem 18 hat die Aufgabe, durch Aufruf eines Terminalclients (z.B. mstsc.exe) über eine RDP-Verbindung 15 eine Terminal-Session 24 zu erzeugen und darin die Programmkomponente StSec 22 zu starten.

Die Programmkomponente StSec 22 ist der Session Kontroller und wird beim RDP-Verbindungsaufbau durch den StSem 18 parametrisiert und innerhalb der neu erzeugten Windows Terminal-Session 24 gestartet. Da StSec 22 sich somit in der Session 24 befindet, ist er in der Lage, dort Prozesse, wie z.B. einen Autolt Interpreter, und damit auch die erwähnten Workflowskripte, welche bei Bezugszeichen 26 symbolisch dargestellt sind, zu starten. Entsprechende Kommandos nimmt der StSec 22 vom StAgent 12 an und führt diese aus. Umgekehrt gibt der StSec 22 stetig Zustandsinformationen des ausgeführten Skripts 26 an den StAgent 12 zurück.

Das vorstehend erwähnte Autolt ist eine Software zur Erstellung von Makros in einer BASIC-ähnlichen Skriptsprache, mit denen Abläufe unter Microsoft Windows automatisiert werden können. Selbstverständlich können auch beliebige andere Skriptinterpreter und -sprachen verwendet werden.

Zusätzlich ist der MultiTracer, wie in Figur 1 gezeigt, vorzugsweise dafür ausgelegt, mehrere parallele Terminal-Sessions auf einem Computer auszuführen. Für jede geplante Terminal-Session 24, 24a, 24b wird hierzu vom StAgent 12 ein eigener StSem Prozess 18, 18a, 18b aufgerufen. Jeder der StSem Prozesse 18, 18a, 18b startet ein eigene Terminal-Session 24, 24a, 24b und ruft darin einen StSec Prozess 22, 22a, 22b auf. Die einzelnen Terminal-Sessions 24, 24a, 24b können dabei mit unterschiedlichen Benutzern und entsprechenden Kennwörtern gestartet werden. Jeder der Terminal-Sessions 24, 24a, 24b ist eine eigene graphische Benutzerschnittstelle 28, 28a, 28b in Form eines Desktops zugeordnet, auf dem unter Verwendung eines jeweiligen Softwareroboters ein Skript 26, 26a, 26b ausgeführt werden kann. Die graphische Auflösung jedes Desktops kann beim Aufruf der Session als Startparameter festgelegt werden.

Nur über die einer Sitzung 24, 24a, 24b zugehörige graphische Benutzerschnittstelle 28, 28a, 28b sind für diese Sitzung Eingaben möglich. Wird der jeweilige Desktop 28, 28a, 28b verdeckt ausgeführt, also nicht angezeigt, so sind in der zugehörigen Session keine Eingaben durch einen Benutzer möglich, und graphische Ausgaben können von keinem externen Benutzer eingesehen werden. In einer solchen verdeckten Sitzung sind Eingaben nur durch den innerhalb der Sitzung von dem bereits in der Sitzung befindlichen StSec Prozess 22, 22a, 22b gestarteten Softwareroboter möglich, der auch die graphische Ausgabe der Sitzung auf dem verdeckten Desktop 28, 28a, 28b einsehen und mittels (konturabhängiger) Mustererkennung auswerten kann. Hierdurch wird ein hohes Maß an Sicherheit gegen unberechtigten Zugriff und Ausspähen erreicht.

Ein weiterer Vorteil ergibt sich, wenn StSec.exe an Stelle und als Ersatz für eine Windows-Shell gestartet wird und somit den Windows Explorer ersetzt. Die Taskleiste mit ihrem Startmenu und auch die Icons auf dem Desktop werden von der Erstinstanz des Windows Explorers oder dergleichen erzeugt und verwaltet. In Anlehnung an Kommandozeilen orientierte Systeme wird dies als Windows-Shell bezeichnet.

Beim MultiTracer ist es möglich, das Starten des Windows Explorer konfigurationsabhängig zu machen. Dies geschieht durch einen Schalter beim Aufruf der Komponente StSem. Neben der Eliminierung störender Einflüsse, wie z.B. diverser Windows Popup Meldungen, kann durch Weglassen des Windows-Explorers die Auslastung des Hauptspeichers reduziert werden. Da es möglich ist, mehrere 100 Sessions parallel auf einem Computer zu betreiben, können hierdurch in beträchtlichem Maße Ressourcen gespart werden.

Grundsätzlich wird der StSem 18 vom bereits erwähnten Agent StAgent 12 aufgerufen, um eine Session 24 zu starten. Dabei spezifiziert der Agent 12 den U-ser, die Auflösung und die Farbtiefe der gewünschten Session 24. Mit dieser Information öffnet der StSem 18 eine intern abgebildete Terminalsession 24 zum angegebenen Host. Im Ausführungsbeispiel, jedoch ohne Beschränkung, ist dies immer der lokale Rechner (localhost).

Das RDP Protokoll erlaubt dabei, der neuen Windows Session 24 ein Programm vorzugeben, welches gestartet werden soll. Dies ist vorliegend die Komponente StSec 22, welche innerhalb dieser Session 24 die Kontrolle über die zu startenden Workflow Skripte 26 übernimmt. Hierzu erhält StSec 22 Steuerkommandos vom Agenten 12. Dies geschieht vorzugweise über .NET Remoting, weswegen der Agent 12 über den StSem 18 einen Port an den StSec 22 weitergibt, der dann auf diesem Port entsprechend auf Agentenkommandos wartet.

StSem 18 wacht nun darüber, dass der StSec 22 fortgesetzt ausgeführt wird, indem er ebenfalls vorzugsweise per .NET-Remoting mit dem StSec 22 kommuniziert. Der Agent 12 gibt allerdings seine Kommandos direkt an den StSec 22, z.B. "Starte Workflow XY" 26.

Microsoft .NET Remoting ist ein Framework, das es Objekten ermöglicht, miteinander zu kommunizieren. Das Framework enthält eine Reihe von Diensten, z.B. Aktivierung und Objektlebensdauer, sowie Kommunikations-Kanäle, die für den Transport von Nachrichten zu und von Remoteanwendungen verantwortlich sind. Die Kommunikation kann dabei über Netzwerkprotokolle, wie z.B. eine TCP-Verbindung oder eine HTTP-Verbindung, erfolgen. Im Ausführungsbeispiel kommunizieren die Prozesse StAgent 12 und StSec 22 über eine interne TCP-Verbindung 17 unter der angegebenen Port-Adresse miteinander.

Eine mögliche Erweiterung besteht darin, neben einer inneren Terminalsession zusätzliche Terminalsessions zu anderen Computern, beispielsweise innerhalb einer Netzwerkdomäne, aufzubauen, so dass Abläufe über mehrere Computer von Ende zu Ende (End2End) getestet und überwacht werden können.

Der bevorzugte Ablauf im Überblick:
- StAgent 12 startet den StSem 18. Als Startparameter werden die folgenden Konfigurationsparameter spezifiziert: User/Passwort, Auflösung, Farbtiefe, TCP-PORT.
- StSem 18 startet eine RDP-Session 24 zum lokalen Terminal-Server des Computers (localhost).
- StSem 18 weist dabei die Session 24 an, das Programm StSec 22 zu starten.
- StSec 22 startet in der neuen Session 24 und wartet auf Kommandos vom StAgent 12.
- StSem 18 wacht über StSec 22,
- StSec 22 startet in der Session 24 die Workflowskripte 26 bzw. den Softwareroboter zur Durchführung von Tests und Messungen, wie beschrieben.

Die Komponenten StSem und StSec sind im Folgenden mit ihrer jeweils bevorzugten Ausgestaltung beschrieben.

### StSem Kommandozeilen Parameter:

stsem.exe -port portnumber -user name -password password [-host hostname] [-r <Widht>x<Height>] [-c colordepth] [-shell]
- port port \t Start StSec.exe Tcp/Ip listener on this port.
- user user\t The user name.
- password password\t The user password.

### Optional:

- host hostname\t Use <hostname> instead of localhost for tcp connections.
- r resolution\t The internal used screen resolution. (e.g.: 800x600) default is: 1024*7868
- c colordepth\t (current version uses always 15/16 Bit!).
- shell\t\t If set, current windows shell will be also started.
- local\t\t If higher security is required, this parameter will restrict the TCP connection to only local connections.
- ssm\t\t Enable Single Session Mode.
- fs\t\t Enable support for font smoothing.

### Schalter Details:

• -port <number>
   Hiermit wird der Port spezifiziert, über den die .NET Remoting-Kommunikation laufen soll. Der StSem gibt diesen Port an den StSec weiter, der dann den eigentlichen Endpunkt darstellt (Listener). StSem benutzt den Port nur, um mit StSec zu kommunizieren.
• -user <name>
   Der Benutzername, wie er in der Windows Benutzerverwaltung eingetragen wurde. Im Falle einer Domäne muss der Domänenname vorangestellt werden: <domaine>\user_name
• -password <name>
   Das Passwort, wie es für den angegebenen Benutzernamen in der Windows Benutzerverwaltung hinterlegt wurde.
   Das Passwort wird nicht im Klartext übergeben, sondern in einer intern verschlüsselten Form. Soll zu Testzwecken mit einem Klartext Passwort gearbeitet werden, muss der optionale Schalter-clearpw mit angegeben werden.
• -host <name> (optional, default: localhost)
   Ohne Angabe wird der lokale Rechner als Zielrechner angenommen. Soll ein Remoterechner erreicht werden, kann dieser entsprechend angegeben werden.
• -r <number>x<number> (optional, default: 1024x768)
   Hiermit kann eine beliebige Auflösung für die zu erzeugende Windows Session eingestellt werden.
• -c <number> (optional, default: 15Bit)
   Falls eine Farbtiefe anders als die voreingestellten 15Bit gewünscht ist, kann diese hier gesetzt werden.
   Einschränkung: Aktuell wird eigentlich nur 15Bit vom RDP-Server unterstützt. Alle anderen Einstellungen werden ignoriert. Dies kann sich für die Zukunft ändern, daher gibt es bereits diese Einstellmöglichkeit.
• -shell (optional, default: ohne Shell)
   Ist die Shell nicht vorhanden, können Ressourcen gespart und störende Einflüsse, wie z.B. warnende Popupfenster, eliminiert werden.
   Wird die Windows Shell auf jeden Fall benötigt, so kann diese mit dem Schalter explizit aktiviert werden.
• -local (optional, default: offene TCP/IP Kommunikation)
   Ist dieser Schalter aktiviert, werden nur TCP/IP Verbindungen von der gleichen Maschine akzeptiert. Es werden daher möglich, Versuche eines 'Angreifers', von außen über entsprechende Schnittstellen an interne Programme zu kommen, verhindert.
• -ssm (optional)
   In Vorbereitung auf den SingleSession-Modus des MultiTracer kann der StSem in diesen Modus geschaltet werden. In diesem Fall wird nicht direkt über eine aufzubauende RDP Verbindung eine Windows Session erzeugt, sondern über ein eingebettetes OS (Betriebssystem; aktuell ohne Beschränkung ein Linux) dafür gesorgt, dass von dort heraus die Session geöffnet wird.
• -fs (optional)
   Ist der Schalter aktiviert, werden die Fontsmoothing Effekte (sofern diese für den angegebenen Benutzer aktiviert wurden) auch an den Terminalclient weiter gegeben.
• [-clearpw] (optional)
   Normalerweise werden Passwörter durch einen ServiceTrace eigenen Algorithmus verschlüsselt und auch nur in dieser Form als -password Parameter akzeptiert. Möchte man zu Testzwecken mit einem Klartext Passwort arbeiten, kann dieser Schalter aktiviert werden.

### StSec Kommandozeilen Parameter

### Usage:

stsec.exe -port portnumber [-local] [-shell]
- port portnumber Start Tcp/Ip listener on this port
- local If set, the StSec will only accept local connections.
- shell Start a Explorer Shell instance.
- hide Hide the console window.

### Schalter Details:

• -local
   Ohne diese Angabe werden auch Verbindungen von anderen Rechnern angenommen. Wird -local angeben, so kann erzwungen werden, dass die Netzwerkverbindungen nur innerhalb der Maschine stattfinden dürfen. Dies erhöht die Sicherheit, dass kein 'Angreifer' von außen auf die Schnittstelle zugreifen kann.
• -shell
   Der Explorer ist die Shell (OS-Userinterface) des Windows Betriebssystems. Es stellt dabei Funktionen wie die Toolbar, das Startmenu und auch die Icons auf dem Desktop zur Verfügung. Oftmals kann in einem GUI basierenden Testlauf auf diese 'Features' verzichtet werden. Wird -shell nicht mitangeben, enthält die neu gestartete Windows Session keine Shell und somit auch keinen Desktop in der gewohnten Form. Da die zu testenden Programme direkt gestartet und dann per Robot (einer entsprechenden Software-Anwendung) bedient werden, ist das Vorhandensein einer Shell nicht notwendig.
   Weitere Vorteile, ohne Default Shell zu arbeiten sind:
   ∘ Spart im MultiTracer Umfeld relativ viel Ressourcen
   ∘ Es können keine störenden Meldungsfenster auftauchen, da diese von der Shell (z. B. Windows Explorer) angezeigt werden.
• -hide
   Sollte in der Regel angegeben werden, damit das mit dem StSec verbundene Konsolenfenster nicht zu sehen ist. Zu Debugzwecken könnte es angezeigt werden, kann aber dann den Messablauf beeinflussen.

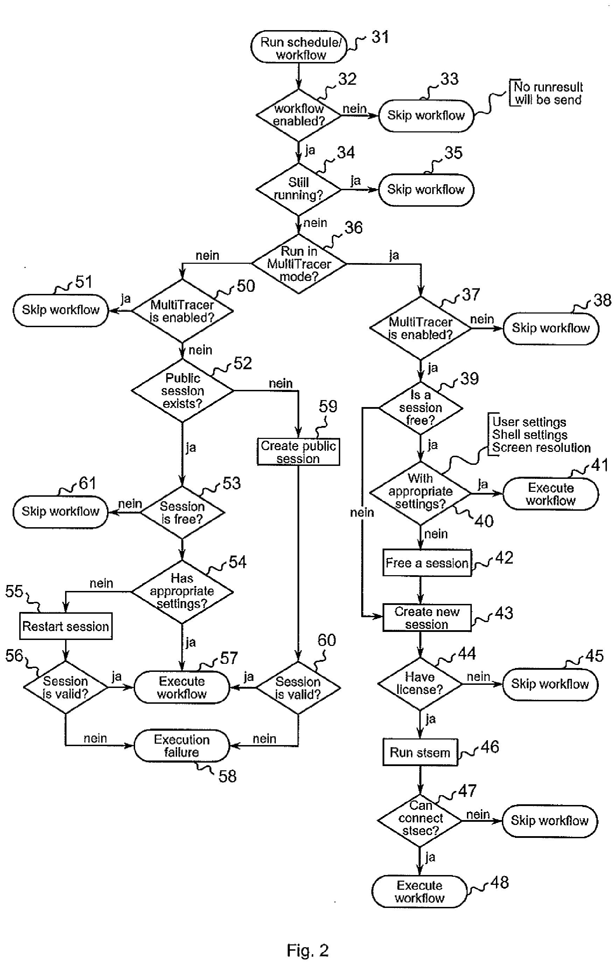

Wenn ein Workflow im Multitracer-Modus eingeplant wird, dann erzeugt der Agent für diesen Workflow basierend auf dessen Schedulingdaten einen sogenannten Job. Dieser Job wird an einen im Agenten integrierten Scheduler übergeben, welcher die zeitliche Ausführungssteuerung der eingeplanten Workflows gewährleistet. Wenn ein Job durch den Scheduler angetriggert wird, wird vorzugsweise der in der beigefügten Figur 2 dargestellte Ablauf durchlaufen. Es sei jedoch darauf hingewiesen, dass die einzelnen Schritte dabei nicht notwendiger Weise alle in der gezeigten Reihenfolge ausgeführt werden müssen.

Zunächst wird über eine durch den Scheduler getriggerte Ausführungsanforderung 31 festgestellt, einen geplanten Arbeitsablauf durchzuführen. Es wird dann in Schritt 32 geprüft, ob der auszuführende Arbeitsablauf überhaupt aktiviert und vom MultiTracer Control Center freigegeben ist. Ist dies nicht der Fall, so wird der Arbeitsablauf übersprungen und in Schritt 33 eine entsprechende Fehlermeldung zurückgegeben bzw. in eine Protokolldatei (Log File) eingetragen, z.B. die Meldung "Workflow not enabled". Ist die Prüfung dagegen positiv, so wird als nächstes in Schritt 34 festgestellt, ob der Arbeitsablauf bereits in Bearbeitung ist. Ist dies der Fall, so wird ein erneutes Starten des Jobs unterdrückt und der Ablauf mit Schritt 35 beendet.

Wenn der Job noch nicht bearbeitet wird, erfolgt eine Prüfung 36, ob der Job im Multi- oder im Single-Session Modus gestartet werden soll. Die Unterscheidung erfolgt, wie bereits erläutert, durch einen Startparameter (-ssm) beim Starten von StSem. Ist der Schalter für Single-Session Modus gesetzt, so wird der linke Zweig durchlaufen, anderenfalls der rechte Zweig. Im Folgenden wird zunächst angenommen, dass der Multi-Session Modus durchlaufen werden soll (rechter Zweig).

Dazu wird in Schritt 37 geprüft, ob der als im Hintergrund ablaufender Systemdienst implementierte MultiTracer-Agent (StAgent) aktiviert ist. Ist StAgent deaktiviert, so wird der Job abgebrochen und in Schritt 38 eine entsprechende Fehlermeldung zurückgegeben, z.B. "MultiTracer Service disabled". Wenn StAgent aktiv ist, wird in Schritt 39 geprüft, ob eine freie Terminal-Session existiert, in der bereits ein StSem Prozess läuft. Ist dies der Fall, muss noch in Schritt 40 festgestellt werden, ob die Terminal-Sitzung die richtigen Einstellungen hat, wie sie durch die Startparameter von StSem definiert wurden, u.a. ob die Einstellungen für den zu verwendenden Benutzeraccount und die Bildschirmauflösung stimmen und ob die Windows-Shell mit gestartet werden soll oder nicht. Stimmen alle Einstellungen, so kann der Workflow in der bestehenden Sitzung in Schritt 41 planmäßig ausgeführt werden.

Sind nicht alle geforderten Einstellungen übereinstimmend, so wird die bestehende, freie Sitzung in Schritt 42 freigegeben, also beendet, und in Schritt 43 wird eine neue Terminal-Sitzung mit den geforderten Einstellung gestartet. Ebenso wird in Schritt 43 eine neue Sitzung geöffnet, wenn in Schritt 39 festgestellt wurde, dass keine freie Sitzung existiert.

Nun erfolgt noch eine Abfrage 44, ob eine gültige Lizenz besteht. So kann beispielsweise die Lizenz zeitlich befristet sein, oder die Lizenz kann auf eine bestimmte Anzahl gleichzeitig erlaubter Sitzungen beschränkt sein. Besteht keine gültige Lizenz, so wird der Ablauf abgebrochen und in Schritt 45 eine entsprechende Fehlermeldung zurückgegeben, z.B. "No valid license available" oder "Number of allowed sessions exceeded".

Besteht eine gültige Lizenz, so wird in Schritt 46 der StSem Prozess gestartet. Wenn StSem läuft, muss noch in Schritt 47 geprüft werden, ob StAgent mit StSem über die vorgegebene Port-Adresse kommunizieren kann. Besteht die interne Netzwerk-Verbindung zwischen StAgent und StSem, so kann in Schritt 48 mit der Ausführung des Arbeitsablaufes begonnen werden. Anderenfalls wird der Job mit einer Fehlermeldung in Schritt 49 abgebrochen, z.B. mit "Connection failed".

Wurde der MultiTracer im Single-Session Modus gestartet, so wird ausgehend von Prüfschritt 36 der linke Zweig durchlaufen. Dazu muss in einem Schritt 50 analog zu Prüfschritt 37 festgestellt werden, ob der MultiTracer Systemdienst aktiv ist. Ist die nicht der Fall, so endet die Ausführung mit der Ausgabe einer entsprechenden Fehlermeldung in Schritt 51.

Ist der Systemdienst aktiv, so wird in Schritt 52 geprüft, ob eine öffentliche Sitzung aktiv ist. Ist dies der Fall, so wird in Schritt 53 geprüft, ob die Sitzung frei ist, ob also darauf zugegriffen werden kann. Kann auf die Sitzung nicht zugegriffen werden, so endet der Ablauf in Schritt 61 mit einer entsprechenden Fehlermeldung, z.B. "Insufficient privileges" oder "Access failed". Ist die Sitzung verfügbar, so wird als nächstes in Prüfschritt 54 festgestellt, ob die Sitzung die verlangten Einstellungen hat. Dieser Schritt entspricht wiederum Schritt 40 im Falle des Multi-Session Modus. Entsprechen die Einstellungen den per Startparametern gewählten Einstellungen, so wird in Schritt 57 die Ausführung des Workflow-Skriptes gestartet.

Unter einer öffentlichen Sitzung wird verstanden, dass die Ausführung des Workflows direkt auf dem gerade geöffneten Desktop geschieht. Da der Desktop für die Ausführung hierbei ja bereits vorhanden ist, kann die Ausführung des Workflows auch ohne Öffnen einer RDP Verbindung vorgenommen werden. Der Single-Session-Modus stellt somit eine früher übliche aber unsichere Vorgehensweise dar, die aber im Ausführungsbeispiel aus Kompatibilitätsgründen vorzugsweise für Anwender, die keine zusätzliche Software, wie z.B. eine TS-Erweiterung, auf ihren Client-Betriebssystemen installieren möchten, weiterhin zusätzlich unterstützt wird.

Ergibt Prüfschritt 54, dass die öffentliche Sitzung nicht die richtigen Einstellungen hat, so wird die Sitzung in Schritt 55 zunächst neu gestartet, d.h. der angemeldete Benutzer wird abgemeldet, und eine neue Sitzung mit den vorgegebenen Einstellungen wird gestartet. Das Starten der Sitzung erfolgt dabei vorzugsweise, wie vorstehend beschrieben, aus einem eingebetteten Betriebssystemkern, z.B. einem kleinen Linux-Kern, heraus, der von dem Computer als externer Computer erkannt wird.

In Schritt 56 wird dann festgestellt, ob eine gültige Sitzung mit den gewählten Einstellungen gestartet werden konnte. Wenn dies der Fall ist, so wird in Schritt 57 mit der Ausführung des Workflow-Skriptes begonnen. Anderenfalls endet der Ablauf in Schritt 58 mit einer entsprechenden Fehlermeldung, z.B. "Execution failed".

Wenn in Prüfschritt 52 keine öffentliche Sitzung gefunden wurde, so wird in Schritt 59 eine öffentliche Sitzung geöffnet. Dies erfolgt wiederum, wie in Schritt 55, vorzugsweise durch Verwendung eines eingebetteten Betriebssystem-Kerns. Wenn eine Prüfung 60 ergibt, dass eine gültige Sitzung mit den gewünschten Einstellungen erzeugt werden konnte, so wird in Schritt 57 mit der Ausführung des Workflow-Skriptes begonnen, anderenfalls wiederum in Schritt 58 die entsprechende Fehlermeldung ausgegeben.

Die beschriebenen Ausführungsbeispiele dienen lediglich dazu, die erfindungsgemäßen Konzepte und Beiträge in einer für den technisch verständigen Leser anschaulichen Weise beispielhaft zu erläutern. Der technisch verständige Leser wird hierdurch in die Lage versetzt, die Erfindung in einer beschrieben oder auch abgewandelten Form umzusetzen. Abschließend sei erwähnt, dass die beschriebenen Merkmale, wie auch äquivalente Abwandlungen davon, in unterschiedlicher Weise kombinierbar sind, um die eingangs genannten Vorteile im erfindungsgemäßen Sinne zu erreichen.

## Patentansprüche

1. Verfahren zur skriptgesteuerten Ausführung von wenigstens einer Applikation auf einem Computersystem unter Zuhilfenahme eines Softwareroboters, der eine graphische Benutzerschnittstelle (28, 28a, 28b) unter Anwendung von Mustererkennung ansteuert, wobei das Computersystem eine Ablaufumgebung (10) bereitstellt, die eine Hardware eines Computers und ein auf dem Computer installiertes Betriebssystem umfasst;
**dadurch gekennzeichnet, dass**
- auf dem Computer ein Terminalserver installiert ist,
- auf dem Computer von einer ersten Programmkomponente (18, 18a, 18b) innerhalb der Ablaufumgebung ein Terminalclient gestartet wird, der über ein Remotesteuerungsprotokoll eine Remoteverbindung zu dem Terminalserver aufbaut, wobei der Terminalclient die graphische Benutzerschnittstelle (28, 28a, 28b) für den Softwareroboter bereitstellt und
- von der ersten Programmkomponente (18, 18a, 18b) innerhalb einer dem Terminalclient zugeordneten Sitzung (24, 24a, 24b) eine zweite Programmkomponente (22, 22a, 22b) gestartet wird, welche den Softwareroboter aufruft und ein Skript (26, 26a, 26b) zur Ausführung der wenigstens einen Applikation ausführt,
wobei der Terminalclient verdeckt ausgeführt wird und die von dem Terminalclient bereitgestellte graphische Benutzerschnittstelle (28, 28a, 28b) nicht auf einer Anzeigeeinheit des Computers dargestellt wird.

2. Verfahren nach Anspruch 1, bei dem in einer Ausgangssitzung (14) die erste Programmkomponente (18, 18a, 18b) gestartet wird, welche den Terminalclient startet und die dem Terminalclient zugeordnete Sitzung (24, 24a, 24b) anweist, die zweite Programmkomponente (22, 22a, 22b) zu starten.

3. Verfahren nach Anspruch 1 oder 2, bei dem auf dem Computer ein Softwareagent (12) läuft, welcher die erste Programmkomponente (18, 18a, 18b) startet und über ein Netzwerkprotokoll die zweite Programmkomponente (22, 22a, 22b) steuert.

4. Verfahren nach Anspruch 3, bei dem die erste Programmkomponente (18, 18a, 18b) der zweiten Programmkomponente (22, 22a, 22b) bei deren Start, vorzugsweise in Form eines Startparameters, einen Kommunikationsport vorgibt, über den der Softwareagent (12) mit der zweiten Programmkomponente (22, 22a, 22b) kommuniziert.

5. Verfahren nach Anspruch 3 oder 4, bei dem der Softwareagent (12) die zweite Programmkomponente (22, 22a, 22b) mittels eines oder mehrerer Steuerkommandos anweist, das Skript (26, 26a, 26b) auszuführen und die zweite Programmkomponente (22, 22a, 22b) an den Softwareagenten Zustandsinformationen über das ausgeführte Skript (26, 26a, 26b) zurück gibt.

6. Verfahren nach zumindest Anspruch 2, bei dem die erste Programmkomponente überwacht, dass die zweite Programmkomponente (22, 22a, 22b) fortgesetzt ausgeführt wird.

7. Verfahren nach einem der vorangehenden Ansprüche, bei die verdeckte Ausführung des Terminalclients durch einen Startparameter gesteuert wird.

8. Verfahren nach einem der vorangehenden Ansprüche, bei dem die zweite Programmkomponente (22, 22a, 22b) innerhalb der dem Terminalclient zugeordneten Sitzung (24, 24a, 24b) anstelle einer Betriebssystem-Shell gestartet wird.

9. Verfahren nach einem der vorangehenden Ansprüche, bei dem die dem Terminalclient zugeordnete Sitzung (24, 24a, 24b) aus einem eingebetteten Betriebssystemkern heraus aufgerufen wird.

10. Computerprogrammprodukt in Form von auf einem Datenträger gespeicherten oder speicherbaren Programmanweisungen, bei deren Ausführung auf einem geeigneten Computer das Verfahren nach einem der vorangehenden Ansprüche durchgeführt wird, wobei die Programmanweisungen insbesondere die erste Programmkomponente (18, 18a, 18b) und die zweite Programmkomponente (22, 22a, 22b) programmtechnisch definieren.

11. Computerprogrammprodukt nach Anspruch 10, enthaltend Programmanweisungen, die einen Softwareagenten (12) programmtechnisch definieren, der programmiert ist, bei Ausführung auf dem Computer die erste Programmkomponente (18, 18a, 18b) zu starten und über ein Netzwerkprotokoll die zweite Programmkomponente (22, 22a, 22b) zu steuern.

12. Computerprogrammprodukt nach Anspruch 10 oder 11, umfassend Programmanweisungen, die einen alternativen, von einer Betriebssysteminstallation unabhängigen Terminalserver programmtechnisch definieren, der programmiert ist, bei Ausführung auf dem Computer mit einem ebenfalls auf dem Computer ausgeführten Terminalclient über ein Remotesteuerungsprotokoll zusammenzuwirken, um eine Terminalsession zu erzeugen.

13. Computersystem, welches eine Ablaufumgebung (10) bereitstellt, die eine Hardware eines Computers, ein auf dem Computer installiertes Betriebssystem, sowie vorzugsweise zumindest weitere installierte Softwareplattform umfasst, wobei das Betriebssystem eine graphische Benutzerschnittstelle (28, 28a, 28b) aufweist, und wobei das Computersystem einen Softwareroboter enthält, der programmtechnisch eingerichtet, ist bei skriptgesteuerter Ausführung die graphische Benutzerschnittstelle (28, 28a, 28b) unter Anwendung von Mustererkennung anzusteuern und dadurch wenigstens eine Applikation auf dem Computer auszuführen,
**gekennzeichnet durch**
einen Terminalserver, einen Terminalclient sowie erste (18, 18a, 18b) und zweite (22, 22a, 22b) Programmkomponenten, wobei durch die erste Programmkomponente (18, 18a, 18b) programmtechnisch eingerichtet ist, innerhalb der Ablaufumgebung den Terminalclient zu starten und derart zu konfigurieren, dass dieser verdeckt ausgeführt wird und über ein Remotesteuerungsprotokoll eine Remoteverbindung zu dem Terminalserver aufbaut, wobei der Terminalclient die graphische Benutzerschnittstelle (28, 28a, 28b) für den Softwareroboter bereitstellt und die von dem Terminalclient bereitgestellte graphische Benutzerschnittstelle (28, 28a, 28b) nicht auf einer Anzeigeeinheit des Computers dargestellt wird, und wobei die erste Programmkomponente (18, 18a, 18b) außerdem programmtechnisch eingerichtet ist, innerhalb einer dem Terminalclient zugeordneten Sitzung (24, 24a, 24b) die zweite Programmkomponente (22, 22a, 22b) zu starten, wobei die zweite Programmkomponente (22, 22a, 22b) programmtechnisch eingerichtet ist, den Softwareroboter aufzurufen und ein Skript (26, 26a, 26b) zur Ausführung der wenigstens einen Applikation auszuführen.

14. Computersystem nach Anspruch 13, mit einem Softwareagenten, der programmtechnisch eingerichtet ist, bei Ausführung auf dem Computer die erste Programmkomponente (18, 18a, 18b) zu starten und über ein Netzwerkprotokoll die zweite Programmkomponente (22, 22a, 22b) zu steuern.

15. Computersystem nach Anspruch 13 oder 14, mit programmtechnischen Mitteln zur Ausführung eines der Verfahren gemäß Anspruch 1 bis 9.

## Claims

1. Method for script-controlled execution of at least one application on a computer system with the aid of a software robot which actuates a graphical user interface (28, 28a, 28b) using pattern recognition, wherein the computer system provides a runtime environment (10) which comprises hardware of a computer and an operating system installed on the computer;
**characterised in that**
- a terminal server is installed on the computer,
- a terminal client is started on the computer by a first program component (18, 18a, 18b) inside the runtime environment, which terminal client establishes a remote connection to the terminal server via a remote control protocol, wherein the terminal client provides the graphical user interface (28, 28a, 28b) for the software robot, and
- a second program component (22, 22a, 22b) is started by the first program component (18, 18a, 18b) within a session (24, 24a, 24b) allocated to the terminal client, which second program component calls up the software robot and executes a script (26, 26a, 26b) for executing the at least one application,
wherein the terminal client is executed in hidden mode and the graphical user interface (28, 28a, 28b) provided by the terminal client is not displayed on a display unit of the computer.

2. Method according to claim 1, wherein in an initial session (14) the first program component (18, 18a, 18b) is started, which program component starts the terminal client and instructs the session (24, 24a, 24b) allocated to the terminal client to start the second program component (22, 22a, 22b).

3. Method according to claim 1 or 2, wherein a software agent (12) runs on the computer, which software agent starts the first program component (18, 18a, 18b) and controls the second program component (22, 22a, 22b) via a network protocol.

4. Method according to claim 3, wherein the first program component (18, 18a, 18b) specifies to the second program component (22, 22a, 22b), preferably in the form of a start parameter when the latter starts, a communication port via which the software agent (12) communicates with the second program component (22, 22a, 22b).

5. Method according to claim 3 or 4, wherein the software agent (12), by means of one or more control commands, instructs the second program component (22, 22a, 22b) to execute the script (26, 26a, 26b) and the second program component (22, 22a, 22b) returns status information relating to the executed script (26, 26a, 26b) to the software agent.

6. Method according to at least claim 2, wherein the first program component checks that the second program component (22, 22a, 22b) continues to be executed.

7. Method according to any one of the preceding claims, wherein the hidden execution of the terminal client is controlled by a start parameter.

8. Method according to any one of the preceding claims, wherein the second program component (22, 22a, 22b) is started within the session (24, 24a, 24b) allocated to the terminal client instead of an operating system shell.

9. Method according to any one of the preceding claims, wherein the session (24, 24a, 24b) allocated to the terminal client is called up from an embedded operating system kernel.

10. Computer program product in the form of program instructions stored or storable on a data storage medium, wherein during execution of the program instructions on a suitable computer the method according to any one of the preceding claims is carried out, the program instructions especially programmatically defining the first program component (18, 18a, 18b) and the second program component (22, 22a, 22b).

11. Computer program product according to claim 10, containing program instructions which programmatically define a software agent (12), which is programmed, on execution on the computer, to start the first program component (18, 18a, 18b) and, via a network protocol, to control the second program component (22, 22a, 22b).

12. Computer program product according to claim 10 or 11, comprising program instructions which programmatically define an alternative terminal server independent of an operating system installation, which terminal server is programmed, on execution on the computer, to co-operate with a terminal client, which is likewise executed on the computer, via a remote control protocol in order to create a terminal session.

13. Computer system which provides a runtime environment (10) comprising hardware of a computer, an operating system installed on the computer, and preferably at least one further installed software platform, wherein the operating system has a graphical user interface (28, 28a, 28b), and wherein the computer system contains a software robot which is set up programmatically, on script-controlled execution, to actuate the graphical user interface (28, 28a, 28b) using pattern recognition and thereby execute at least one application on the computer,
**characterised by**
a terminal server, a terminal client, and first (18, 18a, 18b) and second (22, 22a, 22b) program components, wherein the first program component (18, 18a, 18b) is set up programmatically to start the terminal client inside the runtime environment and to configure it in such a way that it is executed in hidden mode and, via a remote control protocol, establishes a remote connection to the terminal server, wherein the terminal client provides the graphical user interface (28, 28a, 28b) for the software robot, and the graphical user interface (28, 28a, 28b) provided by the terminal client is not displayed on a display unit of the computer, and wherein the first program component (18, 18a, 18b) is also set up programmatically to start the second program component (22, 22a, 22b) within a session (24, 24a, 24b) allocated to the terminal client, the second program component (22, 22a, 22b) being set up programmatically to call up the software robot and execute a script (26, 26a, 26b) for executing the at least one application.

14. Computer system according to claim 13, having a software agent which is set up programmatically, on execution on the computer, to start the first program component (18, 18a, 18b) and to control the second program component (22, 22a, 22b) via a network protocol.

15. Computer system according to claim 13 or 14, having programmatic means for executing any one of the methods according to claim 1 to 9.

## Revendications

1. Procédé d'exécution commandée par script d'au moins une application sur un système informatique à l'aide d'un robot logiciel qui commande une interface utilisateur graphique (28, 28a, 28b) en utilisant la reconnaissance de formes, le système informatique fournissant un environnement d'exécution (10) qui comprend un matériel d'un ordinateur et un système d'exploitation installé sur l'ordinateur ;
**caractérisé en ce que**
- un serveur de terminal est installé sur l'ordinateur,
- un client de terminal est démarré sur l'ordinateur par un premier composant de programme (18, 18a, 18b) dans l'environnement d'exécution, lequel client de terminal établit une connexion à distance avec le serveur de terminal par l'intermédiaire d'un protocole de commande à distance, le client de terminal fournissant l'interface utilisateur graphique (28, 28a, 28b) pour le robot logiciel et
- un second composant de programme (22, 22a, 22b), qui appelle le robot logiciel et exécute un script (26, 26a, 26b) pour exécuter ladite au moins une application, est démarré par le premier composant de programme (18, 18a, 18b) dans une session (24, 24a, 24b) associée au client de terminal,
dans lequel le client de terminal est exécuté de manière cachée et l'interface utilisateur graphique (28, 28a, 28b) fournie par le client de terminal n'est pas représentée sur une unité d'affichage de l'ordinateur.

2. Procédé selon la revendication 1, dans lequel le premier composant de programme (18, 18a, 18b), qui est démarré dans une session initiale (14), démarre le client de terminal et ordonne à la session (24, 24a, 24b) associée au client de terminal de démarrer le second composant de programme (22, 22a, 22b).

3. Procédé selon la revendication 1 ou 2, dans lequel un agent logiciel (12) s'exécute sur l'ordinateur, lequel agent logiciel (12) démarre le premier composant de programme (18, 18a, 18b) et commande le second composant de programme (22, 22a, 22b) par l'intermédiaire d'un protocole de réseau.

4. Procédé selon la revendication 3, dans lequel le premier composant de programme (18, 18a, 18b) prescrit au second composant de programme (22, 22a, 22b), lors de son démarrage, de préférence sous la forme d'un paramètre de démarrage, un port de communication par lequel l'agent logiciel (12) communique avec le second composant de programme (22, 22a, 22b).

5. Procédé selon la revendication 3 ou 4, dans lequel l'agent logiciel (12) ordonne au second composant de programme (22, 22a, 22b), au moyen d'une ou plusieurs instructions de commande, d'exécuter le script (26, 26a, 26b) et le second composant de programme (22, 22a, 22b) renvoie à l'agent logiciel des informations d'état sur le script (26, 26a, 26b) exécuté.

6. Procédé selon au moins la revendication 2, dans lequel le premier composant de programme surveille que le second composant de programme (22, 22a, 22b) continue à être exécuté.

7. Procédé selon l'une des revendications précédentes, dans lequel l'exécution cachée du client de terminal est commandée par un paramètre de démarrage.

8. Procédé selon l'une des revendications précédentes, dans lequel le second composant de programme (22, 22a, 22b) est démarré dans la session (24, 24a, 24b) associée au client de terminal au lieu d'un shell du système d'exploitation.

9. Procédé selon l'une des revendications précédentes, dans lequel la session (24, 24a, 24b) associée au client de terminal est appelée à partir d'un noyau de système d'exploitation intégré.

10. Produit programme d'ordinateur sous la forme d'instructions de programme qui sont stockées ou peuvent être stockées sur un support de données et dont l'exécution sur un ordinateur approprié met en oeuvre le procédé selon l'une des revendications précédentes, les instructions de programme définissant en particulier le premier composant de programme (18, 18a, 18b) et le second composant de programme (22, 22a, 22b) par programmation.

11. Produit programme d'ordinateur selon la revendication 10, contenant des instructions de programme qui définissent par programmation un agent logiciel (12) qui est programmé, lorsqu'il est exécuté sur l'ordinateur, pour démarrer le premier composant de programme (18, 18a, 18b) et pour commander le second composant de programme (22, 22a, 22b) par l'intermédiaire d'un protocole de réseau.

12. Produit programme d'ordinateur selon la revendication 10 ou 11, comprenant des instructions de programme qui définissent par programmation un serveur de terminal alternatif, indépendant d'une installation de système d'exploitation, qui est programmé, lorsqu'il est exécuté sur l'ordinateur, pour coopérer avec un client de terminal également exécuté sur l'ordinateur par l'intermédiaire d'un protocole de commande à distance pour créer une session de terminal.

13. Système informatique qui fournit un environnement d'exécution (10) qui comprend un matériel d'un ordinateur, un système d'exploitation installé sur l'ordinateur, et de préférence au moins une autre plate-forme logicielle installée, dans lequel le système d'exploitation présente une interface utilisateur graphique (28, 28a, 28b) et dans lequel le système informatique contient un robot logiciel qui est conçu par programmation, lorsqu'il est exécuté de façon commandée par script, pour commander l'interface utilisateur graphique (28, 28a, 28b) en utilisant la reconnaissance de formes et ainsi exécuter au moins une application sur l'ordinateur,
**caractérisé par**
un serveur de terminal, un client de terminal ainsi que des premier (18, 18a, 18b) et second (22, 22a, 22b) composants de programme, dans lequel le premier composant de programme (18, 18a, 18b) est conçu par programmation pour démarrer le client de terminal dans l'environnement d'exécution et pour le configurer de telle manière qu'il soit exécuté de manière cachée et établisse une connexion à distance avec le serveur de terminal par l'intermédiaire d'un protocole de commande à distance, dans lequel le client de terminal fournit l'interface utilisateur graphique (28, 28a, 28b) pour le robot logiciel et l'interface utilisateur graphique (28, 28a, 28b) fournie par le client de terminal n'est pas représentée sur une unité d'affichage de l'ordinateur, et dans lequel le premier composant de programme (18, 18a, 18b) est en outre conçu par programmation pour démarrer le second composant de programme (22, 22a, 22b) dans une session (24, 24a, 24b) associée au client de terminal, le second composant de programme (22, 22a, 22b) étant conçu par programmation pour appeler le robot logiciel et exécuter un script (26, 26a, 26b) pour exécuter ladite au moins une application.

14. Système informatique selon la revendication 13, comprenant un agent logiciel qui est conçu par programmation, lorsqu'il est exécuté sur l'ordinateur, pour démarrer le premier composant de programme (18, 18a, 18b) et pour commander le second composant de programme (22, 22a, 22b) par l'intermédiaire d'un protocole de réseau.

15. Système informatique selon la revendication 13 ou 14, comprenant des moyens de programmation pour mettre en oeuvre l'un des procédés selon les revendications 1 à 9.
